# EUROPÄISCHE PATENTSCHRIFT

(11) **EP 2 351 291 B1**
(45) Veröffentlichungstag und Bekanntmachung des Hinweises auf die Patenterteilung: **29.08.2012**
(21) Anmeldenummer: 09760701.4
(22) Anmeldetag: 30.09.2009
(51) Int. Cl.: H04L 12/28, H04L 12/40, H04L 12/10

(54) **DATENÜBERTRAGUNGSGERÄT**
DATA TRANSMISSION DEVICE
APPAREIL DE TRANSMISSION DE DONNÉES

(30) Priorität: 02.10.2008 DE 102008049968
(43) Veröffentlichungstag der Anmeldung: 03.08.2011
(73) Patentinhaber: Mobotix AG, 67722 Winnweiler (DE)
(72) Erfinder: BORCHERS, Klaus, 67731 Otterbach (DE)
(74) Vertreter: Pietruk, Claus Peter
(86) Internationale Anmeldenummer: PCT/DE2009/001360
(87) Internationale Veröffentlichungsnummer: WO 2010/037369

(56) Entgegenhaltungen:
- EP-A- 1 942 600
- WO-A-2007/012014
- US-A1- 2006 239 244
- US-A1- 2007 236 853

## Beschreibung

Die vorliegende Erfindung betrifft das oberbegrifflich Beanspruchte und bezieht sich somit auf die Datenübertragung und Geräte hierfür.

Die Übertragung von Daten erfolgt in der Technik über eine Vielzahl unterschiedlicher Leitungsanordnungen mittels unterschiedlicher Protokolle. Dabei ist eine verbreitete Kommunikationsweise die über das sogenannte Ethernet. Ethernet-Leitungen haben typisch eine Mehrzahl elektrischer Leiter, die gemeinsam abgeschirmt sind. Auf diese Weise lassen sich hohe Übertragungsgeschwindigkeiten erreichen. Oftmals ist es aber nicht erwünscht, neue Leitungen legen zu müssen, etwa bei der Nachrüstung bestehender Altbauten. Hier liegen typisch noch Zweidrahtleitungen wie Klingeldrähte oder Telefonleitungen. Die Verwendung vorhandener Leitungen hat den Vorteil, dass die Installation einfacher ausfallen kann; die Übertragungsraten sind jedoch typisch niedriger. Es ist auch schon bekannt, anstelle vorhandener Klingeldrähte oder Telefonleitungen gewöhnliche Stromkabel zur Datenübertragung zu verwenden. Dies ist als sogenannte "Powerline-Datenübertragung" bekannt. Bei diesem bekannten Verfahren werden simultan Daten und 230 V-Lichtstromnetzenergie über die Netzleitung übertragen. Die bekannte Powerline-Technik scheitert aber oftmals bei größeren Installationen in alten Gebäuden. Hier sind gewöhnlich die Stromkabel aufgrund einer Vielzahl von Verbindungsleitungen, Übergängen, Sicherungskästen usw. schlecht für die Datenübertragung durch die Powerline-Technik geeignet.

Eine simultane Übertragung von Energie und Daten ist auch über das Ethernet möglich, wozu sogar ein dedizierter Standard (802.3af) geschaffen wurde, um Netzwerkendgeräte auch energietechnisch über das Ethernet zu versorgen. Wiederum ergibt sich aber die Notwendigkeit, überall entsprechende Leitungen vorsehen zu müssen.

Es ist wünschenswert, eine Möglichkeit zu schaffen, in welcher die Datenübertragung zwischen verschiedenen Geräten so vereinfacht werden kann, dass keine komplexen Installationen erforderlich sind.

Aus der EP-A-1 942 600 ist eine Netzwerkvorrichtung und ein Verfahren zur Kontrolle der an eine Netzwerkvorrichtung gespeisten Leistung bekannt. Eine Vielzahl von Leistungseingängen werden dabei abgetastet, um abzuklären, ob ein Leistungssignal anliegt und eine aktive Leistungsquelle zu identifizieren. Bestimmt wird die verfügbare Leistung von der aktiven Leistungsquelle und die erforderliche Leistung der Netzwerkvorrichtung und jedweder operativ verbundene Hilfsvorrichtungen werden ebenfalls bestimmt. Es wird geprüft, ob die zur Verfügung stehende Leistung ausreicht.

Aus der US 2007/236853 ist eine Netzwerkvorrichtung bekannt, die einen Transformator mit einer Primärwicklung und einer Sekundärwicklung aufweist. Die Primärwicklung koppelt Empfangseingangssignale an eine physikalische Schicht für den Datenempfang. Es ist ein Impedanzbootschaltkreis vorgesehen, der an die zweite Wicklung gekoppelt ist und dazu dient, die Impedanz der Primärwicklung zu erhöhen.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Die vorliegende Erfindung schlägt somit in einem ersten Grundgedanken ein Datenübertragungsgerät zur Übertragung von Daten und Energie zwischen einem zur Energieübertragung geeigneten Ethernet-Anschluss und einer Gegenstelle über eine lichtnetzstromfreie Zweidrahtleitung vor, wobei vorgesehen ist, dass das Datenübertragungsgerät dazu ausgebildet ist, selbst wahlweise zumindest über einen von Ethernet-Anschluss und lichtnetzstromfreiem Zweidrahtanschluss mit Leistung versorgt zu werden und wobei ein Mittel zur Energieübertragung wie erforderlich zwischen Ethernet-Anschluss und lichtstromnetzfreiem Zweidrahtanschluss sowie ein Energieverbraucherdetektionsmittel vorgesehen ist, um durch testweise Spannungseinspeisung zu detektieren, ob an einem Ethernet-Anschluss ein Energieverbraucher angeschlossen ist und so im Ansprechen darauf eine Energieeinspeisung an einen Ethernet-Anschluss simultan zu einer Datenübertragung bewirken zu können, und wobei weiter eine Spannungsdetektion vorgesehen ist, um zu verhindern, dass empfangene Energie zu Detektionszwecken zurückgespeist wird.

Ein erster Grundgedanke der Erfindung besteht somit in der Erkenntnis, dass die Installation an bestehenden Systemen wesentlich vereinfacht werden kann, wenn die Energieübertragung über lichtnetzstromfreie Zweidrahtanschlüsse gemeinsam mit einer Datenübertragung ermöglicht wird. Dies erlaubt es beispielsweise an Stellen in einem Haus, an denen zuvor eine Klingel oder ein Telefon angeordnet war, mit einer Innenraumkamera zu überwachen, ohne dass die Kamera über typisch unerwünschte Stromkabel separat versorgt werden muss. Dies ergibt nicht nur ein optisch ansprechenderes Aussehen, sondern verringert auch insgesamt die Installationskosten. Der Zweidrahtanschluss ist dabei explizit lichtstromfrei, das heißt, es handelt sich nicht um 230 V-Netzleitungen in einem Gebäude oder dergleichen. In einer besonders bevorzugten Variante ist die Zweidrahtleitung nicht nur frei von 230 V-Spannung, sondern auch frei von anderen fremdeingespeisten Spannungen wie 12 V-Klingelspannungen; dass sich diese Spannungsfreiheit auf den Zustand vor Einspeisung von Energie aus der erfindungsgemäßen Anordnung auf die Zweidrahtleitung bezieht, wird einsichtig sein; auch sei erwähnt, dass nachfolgend zwar durchgehend von einer Lichtstromnetzfreiheit gesprochen wird, dass aber regelmäßig auch die Freiheit von anderen fremdeingespeisten Spannungen mitoffenbart ist, ohne dass dies an jeder Stelle separat erwähnt wird.

In einer besonders bevorzugten Variante wird Energie von der Zweidrahtleitung an den Ethernet-Anschluss so übertragen, dass sich am Ethernet-Anschluss eine Leistungsversorgung gemäß Power-over-Ethernet-Standard ergibt. Dies ermöglicht es, an einem Endpunkt einer Zweidrahtleitung durch das Datenübertragungsgerät ohne zusätzliche Verkabelung die Möglichkeit zu schaffen, Endgeräte ohne eigene Energieversorgung anzuschlie-βen. Bei solchen Endgeräten kann es sich um Mikrophone, Kameras oder Alarmgeber und dergleichen handeln, obwohl diese Endverbraucher nur beispielhaft aufgeführt sind und die Erfindung nicht auf diese nur als bevorzugt aufgeführten Verbraucher beschränkt sein soll.

Es ist weiter das Datenübertragungsgerät so auszubilden, dass von einem Ethernet-Anschluss auf die Zweidrahtleitung hin Energie übertragen wird, also Energie beispielsweise gemäß dem Power-over-Ethernet-Standard aus dem Ethernet entnommen und in die Zweidrahtleitung gespeist wird. Dies ermöglicht es, entweder unmittelbar an der Zweidrahtleitung Endgeräte anzuschließen oder aber in Kombination mit einem Datenübertragungsgerät, das eine Energieübertragung in umgekehrter Richtung ermöglicht, eine Zweidrahtleitung zu nutzen, um sowohl Energie als auch Daten ohne zusätzlichen Installationsaufwand übertragen zu können. Es sind dann beispielsweise an den Endpunkten einer Zweidrahtleitung jeweils nur erfindungsgemäße Datenübertragungsgeräte vorzusehen, um auf beiden Seiten Ethernet-fähige Geräte anschließen zu können. So kann beispielsweise eine Kamera oder ein Kameracluster über eine Zweidrahtleitung mit einem zentralen Server verbunden werden und es sind an der Kamera selbst keine separaten Stromversorgungen nötig.

Bei derartigen Anordnungen kann das Datenübertragungsgerät selbst bidirektional arbeiten, das heißt Energie wird wahlweise entweder von der Zweidrahtleitung auf den Ethernet-Anschluss übertragen oder stattdessen Energie aus dem Ethernet-Anschluss entnommen und in die Zweidrahtleitung eingespeist. Ein solches Vorgehen ermöglicht es, mit ein und derselben Art von Datenübertragungsgeräten eine vollständige Verbindung aufzubauen, die sowohl Ethernet- als auch, dort, wo Ethernet-Leitungen nicht zur Verfügung stehen, Zweidrahtleitungen nutzt, ohne dass in Zwischenbereichen oder an Endpunkten separate Stromversorgungen vorgesehen werden müssen. Dies ermöglicht eine einfache und insbesondere unauffälligere Installation eines Komplettsystems.

Das Datenübertragungsgerät wird erfindungsgemäß ein Abtastmittel oder dergleichen aufweisen, mit welchem erfasst werden kann, ob an einem bestimmten Anschluss ein Energieverbraucher angeschlossen ist. Dies kann beispielsweise dadurch geschehen, dass erfasst wird, ob an einem Leitungspaar eines Anschlusses eine Spannungsdifferenz vorliegt beziehungsweise erzeugt werden kann. Liegt eine Potentialdifferenz zwischen zwei Leitungen eines Paares vor, ohne dass datenübertragungsgeräteseitig eine Spannung auf die Leitung eingespeist wurde, so kann von der Leitung Energie empfangen werden; liegt eine solche Eingangsspannung hingegen nicht vor, ist zumindest auf der Gegenseite des Leitungspaares keine Energieeinspeisung vorgesehen. Es kann dann eine - gegebenenfalls geringe - Testspannung auf das Leitungspaar gespeist werden und/oder eine Testspannung, die bei sehr geringen Strömen schon zusammenbricht, das heißt eine Testspannung aus einer Spannungsquelle mit sehr hohem Innenwiderstand.

Wenn diese Testspannung über dem Leitungspaar erfasst werden kann, ist das Leitungspaar endseitig mit einem allenfalls hohen Widerstand abgeschlossen. Bricht die Spannung hingegen zusammen, so ist an der Gegenseite des Leitungspaares ein Stromfluss möglich, was bedeutet, dass dort ein niedriger Abschlusswiderstand vorliegt, was wiederum typisch der Fall ist, wenn ein Verbraucher dort angeschlossen ist. Aus der Messung einer Spannung am Leitungspaar kann somit darauf geschlossen werden, ob am Gegenanschlussende des Leitungspaares ein Verbraucher angeschlossen ist. Es sei darauf hingewiesen, dass bei dieser Messung (die auch als Widerstandsmessung ausgestaltet sein kann), ein gegebenenfalls standardmäßig erforderlichen Abschlusswiderstand zur Vermeidung von Signalwellenreflexionen als irrelevant betrachtet werden kann. Wenn also ein Leitungspaar auf der Gegenseite einen Abschlusswiderstand benötigt, so wird der Anschluss eines Verbrauchers typisch erst dann detektiert werden, wenn der erfasste Abschlusswiderstand signifikant niedriger ist.

Dass im übrigen andere Arten der Erfassung des Anschlusses eines Energieverbrauchers möglich sind, sei aus Offenbarungsgründen höchst vorsorglich erwähnt.

Besonders bevorzugt ist es, wenn das Datenübertragungsgerät nicht nur eine Energieversorgung von an einen der Datenanschlüsse angeschlossenen beziehungsweise über Leitung damit verbundenen Verbrauchern vorsieht, sondern einen separaten, datenübertragungsunabhängigen Ausgang besitzt, über welchen schwache Verbraucher wie beispielsweise Leuchtdioden oder dergleichen versorgt werden können. Dies kann eine Notbeleuchtung vorsehen, die insbesondere bei entsprechender Ausgestaltung des Datenübertragungsgerätes auch fernschaltbar wäre oder aber zu Wartungs- und Installationszwecken kurzfristig angeschlossen wird. Andere Verbraucher sind gleichfalls gegebenenfalls anschließbar.

Die lichtnetzstromfreie Zweidrahtleitung wird in typischen Beispielen eine Klingel- und/oder Telefonleitung sein und der entsprechende Zweidrahtanschluss des Datenübertragungsgerätes dementsprechend für den Anschluss einer solchen Leitung ausgelegt sein. Dies bezieht sich sowohl auf eine mechanische Auslegung des Datenübertragungsgerätes, bei dem beispielsweise Klemmmöglichkeiten für Einzeldrähte vorgesehen sein können, wie auch alternativ und/oder zusätzlich auf die datenübertragungstechnische Auslegung. Insbesondere ist in bevorzugten Fällen die für die Übertragung über die Zweidrahtleitung vorgesehene Datenrate niedriger sein als jene Datenrate, die über den Ethernet-Anschluss erzielbar ist. Bevorzugt sind mehr als nur zwei Anschlüsse an den Datenübertragungsgeräten vorgesehen. Insbesondere ist es möglich, mehr als einen Ethernet-Anschluss an dem Datenübertragungsgerät anzuordnen. Es ist nicht zwingend erforderlich, wenn mehrere Ethernet-Anschlüsse in dem Datenübertragungsgerät vorgesehen sind, alle derartigen Ethernet-Anschlüsse als Power-over-Ethernet-Ports auszulegen; allerdings ist dies möglich und bevorzugt. Das Vorsehen mehrerer Ethernet-Ports an dem Datenübertragungsgerät ermöglicht es, auf einen Switch, Hub oder Router zu verzichten, wenn die entsprechende Funktionalität im Datenübertragungsgerät selbst vorgesehen wird. Dabei kann die Leistungsversorgung eines solchen Switches, Hubs oder Routers (im Nachfolgenden wird aus Gründen der sprachlichen Vereinfachung nur noch von Switches gesprochen) über eine Ferneinspeisung einer Versorgungsspannung geschehen, wobei die Versorgungsspannung, wie oben dargelegt ist, wahlweise auf der Zweidrahtseite oder auf der Seite des Ethernets bei einem Eingang geschehen kann. Es sei auch darauf hingewiesen, dass gegebenenfalls eine Multifunktionalität dergestalt vorgesehen sein kann, dass, wenn mehrere Zweidraht- und/oder mehrere Ethernet-Anschlüsse vorgesehen sind und aus mehr als einem Anschluss Energie empfangen werden kann, unterschiedliche Anschlüsse aus unterschiedlichen Quellen gespeist werden können.

Es ist besonders bevorzugt, wenn bei mehreren Ethernet-Anschlüssen am Datenübertragungsgerät die Datenübertragung zwischen einzelnen Ethernet-Anschlüssen schneller als über die Zweidrahtleitung ermöglicht wird. Dies erlaubt es beispielsweise, lokal einen Drucker von einem PC sehr schnell anzusprechen, während eine zu einer Kamera führende Zweidrahtleitung mit geringer, aber insbesondere aufgrund einer Datenkompression in der Kamera ausreichenden Datenübertragungsgeschwindigkeit betrieben wird.

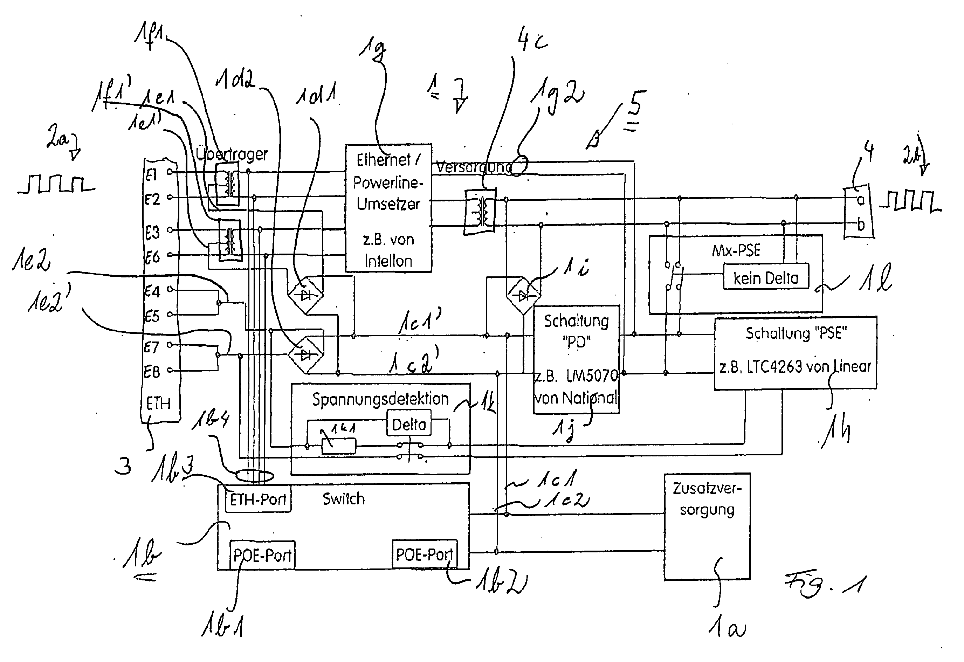

Die Erfindung wird im Folgenden unter Bezugnahme auf Fig. 1 gezeigt. In dieser ist dargestellt
- Fig. 1: ein Datenübertragungsgerät gemäß der vorliegenden Erfindung.

Nach Fig. 1 umfasst ein allgemein mit 1 bezeichnetes Datenübertragungsgerät 1 zur Übertragung von Daten 2 zwischen einem zur Energieübertragung geeigneten Ethernet-Anschluss 3 und einem lichtnetzstromfreien Zweidrahtanschluss 4 ein Mittel 5 zur Energieübertragung zwischen Ethernet-Anschluss 3 und lichtnetzstromfreiem Zweidrahtanschluss 4.

Das Datenübertragungsgerät ist im dargestellten Ausführungsbeispiel ein autarkes, nicht mit einem separaten Netzteil versehenes Datenübertragungsgerät 1, welches auch einen Anschluss 1a einer Zusatzversorgung für Verbraucher, mit denen keine Daten ausgetauscht werden müssen, aufweist, sowie ein Switchelement 1b, das mehrere Power-over-Ethernet-Ports 1b1, 1b2 aufweist und intern mit dem zur Energieübertragung geeigneten Ethernet-Anschluss 3 verbindbar ist. Der Switch 1b ist hier als integraler Teil des erfindungsgemäßen Datenübertragungsgerätes dargestellt und kann zwischen den hier als POE-Ports dargestellten Ethernet-Anschlüssen 1b1 und 1b2 sowie dem Ethernet-Port 3 mit voller Geschwindigkeit, beispielsweise 1 MB/s oder darüber kommunizieren. Die Leistungsversorgung des Switches erfolgt über die an den Ethernet-Port eingespeiste Energie, wie nachfolgend noch beschrieben werden wird.

Es sei erwähnt, dass ein derartiger Switch 1b, der wenigstens einen Power-over-Ethernet-Port sowie wenigstens zwei weitere Ethernet-Ports aufweist, nicht nur in Verbindung mit dem erfindungsgemäßen Datenübertragungsgerät vorteilhaft ist, sondern für sich genommen Vorteile bietet und auch für sich genommen als erfinderisch angesehen wird; die Einreichung von Teilanmeldungen hierauf bleibt vorbehalten. Die bei einem solchen unabhängigen Switch, Hub oder Router sich ergebende erforderliche interne Beschaltung zur Leistungsversorgung der die Switchfunktionalität bewirkenden Schaltkreise wird sich aus dem Nachfolgenden ohne weiteres ergeben.

Sie erfolgt im dargestellten Beispiel über Leitungen 1c1, 1c2, die wiederum von Leitungen 1c1', 1c2' Energie in Form von Gleichspannungsenergie aus Verpolschutzschaltkreisen 1d1, 1d2 empfangen, wobei die Verpolschutzschaltkreise ihrerseits Energie aus dem Ethernet-Port 3 empfangen. Die Leitungen 1e1 und 1e2' sind dabei an jeweilige Mittelabzapfungen eines Datenübertragers 1f1 beziehungsweise 1f1' angeschlossen, wobei der Datenübertrager 1f1 Signale über die Anschlüsse E1, E2 des Ethernet-Ports 3 empfängt und der Übertrager 1f1' Signale über die Leitungspaare E3 und E6 des Ethernet-Ports 3 sendet. Die Leitungen 1e2 beziehungsweise 1e2' führen hingegen zu Leitungspaaren E4, E5 beziehungsweise E7, E8 des Ethernet-Ports 3 und können gleichfalls Leistung empfangen.

Die Leitungen E1, E2, E3, E6 bilden einen Vierdrahtleitungssatz für die Ethernet-Übertragung der Daten 2a. Die Übertrager 1f1 und 1f1' sind in der Lage, die Daten 2a mit hinreichend hoher Frequenz übertragen zu können. Die Übertrager 1f1 beziehungsweise 1f1' sind ausgangsseitig zum einen mit dem Ethernet-Port 1b3 des Switches 1b verbunden, vergleiche das Leitungsbündel 1b4, sowie an einen per se herkömmlichen Ethernet-Powerline-Umsetzer 1g, wie er beispielsweise von IN-TELLON erhältlich ist. Der Ethernet-Powerline-Umsetzer wird über eine Versorgungsleitung 1g2 versorgt, wobei der um die Versorgungsleitung gezeichnete Kreis andeutet, dass die Versorgungsleitung mehr als einen Draht umfassen kann, um mehrere Spannungen und/oder unterschiedliche Potentiale an den Ethernet-Powerline-Umsetzer 1g heranzuführen.

Das Ethernet-Übertragungsgerät 1 umfasst nun weiter eine Power-Sourcing-Equipment-Schaltung 1h entsprechend dem Standard 802.3af-POE. Diese Schaltung 1h ist per se herkömmlich und kann beispielsweise als Baustein LTC4263 von Linear Technology erhalten werden.

Es ist weiter eine Verpolschutzanordnung auf der Zweidrahtseite hinter dem Anschluss 4 vorgesehen, vergleiche li. Auch die an den Anschlüssen AB des Zweidrahtanschlusses 4 empfangenen Signale werden über einen Übertrager 4c geführt und an eine entsprechende Schnittstelle des Ethernet-/Powerline-Umsetzers 1g, der ansonsten ebenfalls die Signale hinter den Übertragern 1f1 und 1g1' erhält, um einen Datenaustausch zwischen den Leitungen E1, E2, E3, E6 einerseits und 4a 4b andererseits zu erhalten, so dass Datenpakete 2a und 2b jeweils auf die andere Seite übertragen werden können.

Die Diodenschaltung 1i führt ausgangsseitig auf die auch von den Diodenschaltungen 1d2 und 1d1 signalbeaufschlagten Leitungen 1c1' beziehungsweise 1c2'. Diese Leitungen 1c1' und 1c2' sind wiederum eingangsseitig mit einer Powerdetektionsschaltung für den Power-over-Ethernet-Standard verbunden, vergleiche Bezugszahl 1j. Bei diesem Baustein kann es sich um einen Standardbaustein, beispielsweise den Baustein LM5070 von National Technology, handeln. Dieser Baustein ist dazu ausgebildet, einen definierten Widerstandswert in einer Aushandelphase zwischen den Leitungen 1c1' und 1c2' darzubieten, wenn von einer Spannungsversorgung abgeklärt werden soll, ob an eine Leitung ein Spannungssignal anzulegen ist. Mit anderen Worten kann unter Beachtung der einschlägigen Protokolle, beispielsweise auf der Gegenstelle, die mit dem Ethernet-Port 3 verbunden ist, festgestellt werden, ob Datenübertragungsgerät 1 zur Abnahme von Energie beziehungsweise Leistung bereit ist. Dies wird dann der Fall sein, wenn eine schwache Testspannung einen entsprechenden, schwachen Teststrom über die Leitung bewirkt. Dies wird nicht der Fall sein, wenn über die Leitung 4a 4b bereits Spannung anliegt. Damit kann verhindert werden, dass sich Spannungsquellen, insbesondere bei Verpolung, die zum einen auf der Ethernet-Seite und zum anderen gleichzeitig auf der Zweidrahtseite vorgesehen werden, gegenseitig stören oder zerstören. Es wird im übrigen davon ausgegangen, dass eine entsprechende Abfrage einer Leistungsabnahmebereitschaft auch dann vorgesehen wird, wenn Leistung über die Zweidrahtleitung 4 an das Datenübertragungsgerät 1 eingespeist werden soll.

Das Datenübertragungsgerät 1 weist weiter eine Spannungsdetektion 1k auf, mit welcher verhindert werden kann, dass eine über den Ethernet-Port empfangene Energie, die in Schaltung 1j "PD" detektiert wird, über die Leistungsversorgungsanordnung "PSE" zurückgespeist wird, um testweise zu überprüfen, ob am Ethernet-Port ein Verbraucher sitzt. Diese Spannungsdetektion 1k ist erfindungsgemäß vorgesehen, weil sonst der Fall eintreten könnte, dass die niedrige Testspannung auf eine schon eine hohe Versorgungsspannung führende Leitung aufgeschaltet wird. Im POE-Standard kann ein solcher Fall nicht eintreten, weil dort nur von einem Ethernet-Switch Leistung einlaufen und eine Rückspeisung nicht auftreten kann. Mit der Spannungsdetektion wird also eine Bidirektionalität der Energieweiterspeisung sicherer gemacht. Wie nur schematisch angedeutet, kann eine Durchleitung (vollständig) für eine Versorgungsspannung vollständig ausgeschlossen werden, wenn ein entsprechender Spannungsabfall über einen Widerstand bestimmt wird, vergleiche den nur schematisch in 1k angedeuteten Schaltkreis Delta sowie den Widerstand 1k1. Hier wird also eine Spannung gegebenenfalls nur dann von dem Powersourcing-Equipment-Kreis an die Leitungen E4, E5, E7, E8 ausgegeben, wenn dort durch Detektion eines entsprechenden Spannungs/Stromverhaltens festgestellt wurde, dass ein Leistungsabnehmer auf der Gegenseite angeschlossen ist. Entsprechend ist eine Funktion auf der Seite zum Zweidrahtanschluss 4 hin, wo eine entsprechende Anordnung 11 vorgesehen ist. Obwohl die Durchschaltung als mit Relais bewirkt dargestellt ist, wird für den Fachmann unmittelbar einsichtig sein, dass dies nur der besseren Erläuterung und unmittelbaren Verständlichkeit des Schaltkreises dient, gleichwohl aber in der Praxis für die Durchschaltung der Spannungen typisch Transistoren und dergleichen eingesetzt werden.

Für Leitungen 4a, 4b, das heißt Anschluss 4, wird lediglich überprüft, ob zwischen den Leitungen 4a, 4b bereits eine Spannung anliegt. Sofern dies nicht der Fall ist, kann eine Spannung aufgeschaltet werden. Die Überprüfung erfolgt mit einem Schaltkreismittel 11. Dass ein Test auf Kurzschluss der Anschlüsse 4a, 4b oder darauf, ob ein Verbraucher angeschlossen ist, durchführbar wäre, wie per se aus dem testweisen Bestimmen des Spannungs-Strom-Verhaltens aus dem POE-Standard bekannt, sei offenbart.

Die Anordnung kann nun auf verschiedene Weisen betrieben werden.

Zum einen kann das Modul über einen POE-Switch mit Energie versorgt werden. Dies kann über die Leitungen 1, 2 und 3, 6 oder über die Leitungen 4, 5 und 7, 8 geschehen, und zwar entsprechend jeweils über die entsprechenden Verpolschutzschaltungen. Bei Anliegen einer solchen extern eingespeisten Versorgungsspannung wird die PD-Schaltung 1j eine erfolgreiche Detektion eines Verbrauchers auf der Energieeinspeise(gegen)seite bewirken und danach Leistung durchschalten, und zwar insbesondere zur Versorgung des ETH-Powerline-Umsetzers 1g und der PSE-Schaltung 1h sowie der Schaltung 11, um wie erforderlich auch die Zweidrahtleitungen 4a, 4b mit Energie zu beaufschlagen. Dabei wird die Einspeisung von Energie auf die Zweidrahtleitung 4a 4b nicht geschehen, ohne dass zuvor durch die Schaltung 11 sichergestellt wurde, dass von dort, das heißt von den Leitungen 4a, 4b nicht bereits auch Energie erhalten werden kann beziehungsweise dort Spannung anliegt.

Alternativ kann eine Stromversorgung stattdessen über die Zweidrahtleitung 4a 4b erfolgen. Über die Verpolschutzschaltung 1i wird dann wiederum die Schaltung PD spannungsbeaufschlagt, was anzeigt, dass ein Verbraucher angeschlossen ist, so dass in einer Aushandelphase zwischen dem Datenübertragungsgerät 1 und einem auf der Gegenstelle des Anschlusses 4 vorgesehenen Leistungsversorgungsgerät festgestellt wird, dass ein Stromabnehmer vorhanden ist. (Dass es stattdessen auch möglich ist, eine auf den Leitungen 4a, 4b empfangene Leistung einfach für den Fall durchzustellen, dass von der Ethernet-Anschlussseite noch keine Energie erhalten wird, und zwar durchzustellen ohne vorheriges Aushandeln unter Berücksichtigung eines Spannungs-/Stromverhaltens, sei erwähnt. Diese einfachere Ausbildung ist bevorzugt, wenn auf der Eingangsseite 4a 4b nicht erwartet werden kann, dass eine Gegenstelle vor Leistungsbeaufschlagung der Anschlüsse 4a 4b eine protokollgemäße Abwicklung abwartet, sondern vielmehr erwartet werden muss, dass die Gegenstelle des Anschlusses 4 sofort und unbedingt Leistung (bzw. Energie) einspeist.) Intern kann dann die empfangene Leistung auf einerseits den Ethernet-/ Powerline-Umsetzer und andererseits auf weitere Verbraucher, beispielsweise auch solche, die am Ehternet-Port 3 oder an den Ethernet-Port 1b1 und 1b2 beziehungsweise an der Zusatzversorgung angeschlossen sind, weitergegeben werden. Es sei darauf hingewiesen, dass einleuchtenderweise diese auch versorgt werden können bei Anschluss einer Leistungsquelle an den Ethernet-Port 3.

Wenn hingegen eine Versorgung nur des Datenübertragungsgerätes aus entweder dem Ethernet-Port 3 oder der Zweidrahtleitung 4 erforderlich ist, ohne dass Leistung durchgeschaltet werden muss, wird aufgrund der jeweils vorgesehenen Spannungsdetektion keine Versorgungsspannung an irgendwelche externen Anschlüsse ausgegeben werden müssen.

Durch die dargestellte Schutzschaltung wird auch verhindert, dass sich durch Anschluss von spannungsversorgenden Geräten sowohl auf dem Ethernet-Port 3 als auch an den Zweidrahtanschluss 4 eine wechselseitige Beschädigung oder eine Beschädigung des Datenübertragungsgerätes gemäß der vorliegenden Erfindung eintritt.

Dass eine Versorgung des Anschlusses 1a entweder dauerhaft oder erforderlichenfalls auch nur nach entsprechender Überprüfung der Spannungs-Strom-Verhältnisse am Ausgang erfolgt, sei erwähnt.

## Patentansprüche

1. Datenübertragungsgerät (1)
zur Übertragung von
Daten (2) und
Energie
zwischen
einem
zur Energieübertragung geeigneten
Ethernet-Anschluss (3)
und einer Gegenstelle
über eine lichtnetzstromfreie Zweidrahtleitung
**dadurch gekennzeichnet, dass**
das Datenübertragungsgerät dazu ausgebildet ist,
selbst
wahlweise zumindest über einen von
Ethernet-Anschluss (3) und
lichtnetzstromfreiem Zweidrahtanschluss (4) mit Leistung versorgt zu werden,
wobei
ein Mittel (5) zur
Energieübertragung wie erforderlich
zwischen Ethernet-Anschluss (3) und
lichtstromnetzfreiem Zweidrahtanschluss (4) sowie
ein Energieverbraucherdetektionsmittel vorgesehen ist, um
durch testweise Spannungseinspeisung zu detektieren, ob
an einem Ethernet-Anschluss
ein Energieverbraucher angeschlossen ist und so
im Ansprechen darauf
eine Energieeinspeisung
an einen Ethernet-Anschluss
simultan zu einer Datenübertragung bewirken zu können,
wobei weiter
eine Spannungsdetektion (1k) vorgesehen ist,
um zu verhindern, dass
empfangene Energie
zu Detektionszwecken
zurückgespeist wird.

2. Datenübertragungsgerät (1) nach dem vorhergehenden Anspruch, **dadurch gekennzeichnet, dass** das Mittel zur automatischen Energieübertragung dazu ausgebildet ist, wahlweise Energie von der Zweidrahtleitung auf den Ethernet-Anschluss (3) oder umgekehrt zu übertragen, insbesondere als Gleichspannungsenergie.

3. Datenübertragungsgerät (1) nach einem der vorhergehenden Ansprüche, **dadurch gekennzeichnet, dass** der lichtnetzstromfreie Zweidrahtanschluss (4) zum Anschluss an eine Niederspannungszweidrahtleitung ausgelegt ist, insbesondere zum Anschluss an eine Klingeldraht- und/oder Telefondrahtleitung.

4. Datenübertragungsgerät (1) nach einem der vorhergehenden Ansprüche, **dadurch gekennzeichnet, dass** das Datenübertragungsgerät (1) zur Übertragung von Daten über den Ethernet-Anschluss (3) mit einer höheren Datenrate als über die Zweidrahtleitung ausgebildet ist, wobei mehrere Ethernet-Anschlüsse vorgesehen sind.

5. Datenübertragungsgerät (1) nach einem der vorhergehenden Ansprüche, **dadurch gekennzeichnet, dass** mehr als ein Ethernet-Anschluss (3) vorgesehen ist und eine Datenübertragung zwischen den Ethernet-Anschlüssen mit einer Datenübertragungsrate ermöglicht ist, die höher ist als die Datenübertragungsrate über die lichtnetzstromfreie Zweidrahtleitung, wobei das Datenübertragungsgerät (1) insbesondere mit einer Switch-, Route- und/oder Hub-Fähigkeit vorgesehen ist.

6. Datenübertragungsgerät (1) nach einem der vorhergehenden Ansprüche, **dadurch gekennzeichnet, dass** es zur zusätzlichen und/oder separaten Energieversorgung eines datenübertragungsfrei angeschlossenen Verbrauchers vorgesehen ist.

## Claims

1. Data transmission device (1)
for transmission of
data (2) and
power
between
an
Ethernet connection (3),
which is suitable for power transmission,
and an opposite end
via a two-wire line which carries no mains current,
**characterized in that**
the data transmission device is designed to be supplied with power itself optionally at least via one of
Ethernet connection (3) and
two-wire connection (4) which carries no mains current,
with
a means (5) being provided for
power transmission as required
between the Ethernet connection (3) and
the two-wire connection (4), which carries no mains current
and
a power load detection means is provided,
in order
by voltage feed for test purposes,
to detect whether
a power load is connected
to an Ethernet connection and thus,
in response to this,
to be able to feed power
to an Ethernet connection,
simultaneously with data transmission,
with
a voltage detection means (1k) furthermore being provided,
in order to prevent
received power
being fed back
for detection purposes.

2. Data transmission device (1) according to the preceding claim, **characterized in that** the means for automatic power transmission is designed to selectively transmit power from the two-wire line to the Ethernet connection (3), or vice versa, in particular as DC voltage power.

3. Data transmission device (1) according to one of the preceding claims, **characterized in that** the two-wire connection (4) which carries no mains current is designed for connection to a lowvoltage two-wire line, in particular for connection to a bell wire and/or telephone wire line.

4. Data transmission device (1) according to one of the preceding claims, **characterized in that** the data transmission device (1) is designed for transmission of data via the Ethernet connection (3) at a higher data rate than via the two-wire line, with a plurality of Ethernet connections being provided.

5. Data transmission device (1) according to one of the preceding claims, **characterized in that** more than one Ethernet connection (3) is provided, and data can be transmitted between the Ethernet connections at a data transmission rate which is higher than Data transmission rate via the two-wire line which carries no mains current, with the data transmission device (1) being provided, in particular, with a switch, route and/or hub capability.

6. Data transmission device (1) according to one of the preceding claims, **characterized in that** the device is intended to additionally and/or separately supply power to a load which is connected without data being transmitted.

## Revendications

1. Dispositif de transmission de données (1) destiné à transférer des données (2) et de l'énergie, entre une connexion Ethernet (3) permettant la transmission d'énergie, et un point opposé par l'intermédiaire d'une ligne bifilaire sans courant secteur,
**caractérisé en ce que**
le dispositif de transmission de données est lui-même conçu pour être alimenté en puissance d'une manière pouvant être sélectionnée par l'intermédiaire de l'une de la connexion Ethernet (3) et de la ligne bifilaire sans courant secteur (4),
dans lequel il est prévu un moyen (5) destiné à transmettre de l'énergie de la manière nécessaire entre la connexion Ethernet (3) et la ligne bifilaire sans courant secteur (4) ainsi qu'un moyen de détection de consommateur d'énergie, afin de détecter, par application d'une tension de test, si un consommateur d'énergie est relié à une connexion Ethernet et de pouvoir effectuer ainsi, en réponse à ce test, une alimentation en énergie d'une connexion Ethernet en même temps qu'une transmission de données,
dans lequel il est en outre prévu une détection de tension (1k) afin d'éviter que l'énergie reçue soit réinjectée à des fins de détection.

2. Dispositif de transmission de données (1) selon la revendication précédente, **caractérisé en ce que** le moyen destiné à transmettre automatiquement de l'énergie est conçu de manière à transmettre sélectivement de l'énergie de la ligne bifilaire à la connexion Ethernet (3) ou inversement, notamment sous la forme d'une énergie à tension continue.

3. Dispositif de transmission de données (1) selon l'une quelconque des revendications précédentes, **caractérisé en ce que** la ligne bifilaire sans courant secteur (4) est conçue pour un raccordement à une ligne bifilaire à basse tension, notamment pour le raccordement à une ligne de fil de sonnerie, et/ou à une ligne de fil téléphonique.

4. Dispositif de transmission de données (1) selon l'une quelconque des revendications précédentes, **caractérisé en ce que** le dispositif de transmission de données (1) est conçu pour transmettre des données par l'intermédiaire de la connexion Ethernet (3) avec un débit de données plus élevé que par l'intermédiaire de la ligne bifilaire, plusieurs connexions Ethernet étant prévues.

5. Dispositif de transmission de données (1) selon l'une quelconque des revendications précédentes, **caractérisé en ce qu'**il est prévu plus d'une connexion Ethernet (3) et **en ce qu'**il est possible d'effectuer une transmission de données entre les connexions Ethernet avec un débit de transmission de données supérieur au débit de transmission de données obtenu par l'intermédiaire de la ligne bifilaire sans courant secteur, le dispositif de transmission de données (1) étant notamment muni d'une fonctionnalité de commutateur, de routeur et/ou de concentrateur.

6. Dispositif de transmission de données (1) selon l'une quelconque des revendications précédentes, **caractérisé en ce qu'**il est prévu pour l'alimentation en énergie de manière supplémentaire et/ou séparée d'un consommateur relié sans transmission de données.
